# EUROPEAN PATENT SPECIFICATION

(11) **EP 4 455 739 B1**
(45) Date of publication and mention of the grant of the patent: **25.03.2026**
(21) Application number: 23742931.1
(22) Date of filing: 18.01.2023
(51) Int. Cl.: G02B 1/00, C09J 151/00, C09J 11/04, C08F 265/06

(54) **OPTICAL IMAGING ELEMENT WITH MAGNETIC REFLECTIVE LAYER IMAGING UNITS, AND PREPARATION METHOD THEREFOR**
OPTISCHES BILDGEBUNGSELEMENT MIT MAGNETISCHEN REFLEKTIERENDEN SCHICHTBILDGEBUNGSEINHEITEN UND HERSTELLUNGSVERFAHREN DAFÜR
ÉLÉMENT D'IMAGERIE OPTIQUE POURVU D'UNITÉS D'IMAGERIE À COUCHE RÉFLÉCHISSANTE MAGNÉTIQUE, ET SON PROCÉDÉ DE PRÉPARATION

(30) Priority: 19.01.2022 CN 202210057106
(43) Date of publication of application: 30.10.2024
(73) Proprietor: Xianghang (Rudong) Technology Co., Ltd, Nantong, Jiangsu 226000 (CN)
(72) Inventor: HAO, Yaqi, Nantong, Jiangsu 226000 (CN); ZHANG, Bing, Nantong, Jiangsu 226000 (CN)
(74) Representative: Chung, Hoi Kan
(86) International application number: PCT/CN2023/072887
(87) International publication number: WO 2023/138616

(56) References cited:
- CN-A- 107 636 496
- CN-A- 108 318 948
- CN-A- 109 239 819
- CN-A- 111 856 790
- CN-A- 112 647 053
- CN-A- 114 089 445
- CN-A- 114 397 768
- JP-A- 2013 109 211
- JP-B1- 5 047 403
- US-A1- 2016 062 097
- US-A1- 2016 062 097
- US-A1- 2018 045 972

## Description

### TECHNICAL FIELD

The present disclosure belongs to the technical field of optical imaging elements, and in particular to, an optical imaging element with magnetic reflective layer imaging units and a preparation method thereof.

### BACKGROUND

In recent years, with the rapid development of advanced technologies such as aerospace technology, photoelectric technology, atomic energy technology, and laser technology, related performances of optical elements are required increasingly. In the high-tech fields, the optical elements are widely used, but the requirement for surface quality of the optical elements is relatively high. However, the resolution and clarity of aerial imaging of a micro-channel matrix optical waveguide slab realized by two orthogonal transparent materials adopted currently are not sufficient, which not only affects the user experience, but also places higher requirements for application scenarios, resulting in great constraints on the commercial promotion and large-scale application of dielectric-free aerial imaging technology. US2016/062097A discloses a reflection imaging device includes a first component board, a second component board, and flat plates. CN109239819A discloses optical imaging element having a pair of light transmitting stack bodies and a second adhesive layer bonding the pair of light transmitting stack bodies. CN107636496A discloses a method for manufacturing an optical control panel where a plurality of belt-like reflection surfaces are formed therein at a prescribed pitch along a direction orthogonal to the thickness direction. JP5047403B discloses an optical imaging device.

### SUMMARY

Aiming at the above-mentioned defects, the present disclosure provides an optical imaging element with magnetic reflective layer imaging units and a preparation method thereof, where a binary magneto-optical photonic crystal with a modular structure can be formed, or a ternary magneto-optical photonic crystal structure can be formed when a plurality of optical imaging units including upper light-transmitting laminates and lower light-transmitting laminates are stacked, a non-reciprocal effect at an edge of a band gap is maximized, a magneto-optical isolator function is realized by using a non-reciprocal phase shift region, and the non-reciprocal phase shift region can be realized without a large thickness, thereby reducing the light loss, improving the refraction imaging accuracy, realizing a photonic band gap by using a central magnetic layer with a large dielectric constant of the reflective layer, and suppressing the spontaneous emission of molecules or atoms with optical frequency falling in the band gap.

The present disclosure provides the following technical solutions: An optical imaging element with magnetic reflective layer imaging units is provided. The optical imaging element includes a plurality of superimposed optical imaging units. The optical imaging unit includes an upper light-transmitting laminate and a lower light-transmitting laminate. The upper light-transmitting laminate and the lower light-transmitting laminate have the same structure composed of a plurality of light-transmitting strips with reflective layers in parallel. The direction of a first light-transmitting strip in the upper light-transmitting laminate is vertically intersected with the direction of a second light-transmitting strip in the lower light-transmitting laminate.

The reflective layer is a sandwich laminated metal magnetic thin layer. The sandwich laminated metal magnetic thin layer includes a first metal aluminum layer, a central magnetic layer, and a second metal aluminum layer. The central magnetic layer is sandwiched between the first metal aluminum layer and the second metal aluminum layer. The sandwich laminated metal magnetic thin layer is bonded to the light-transmitting strip by magnetron sputtering. The central magnetic layer is a Fe₃O₄ magnetic thin layer or a neodymium-iron-boron magnetic thin layer. The neodymium-iron-boron magnetic thin layer has a thickness of 0.05-0.2 mm. The Fe₃O₄ magnetic thin layer has a thickness of 0.05-0.2 µm.

Further, the upper light-transmitting laminate and the lower light-transmitting laminate are cured and adhered by a transparent optical adhesive. The plurality of superimposed optical imaging units are cured and adhered by the transparent optical adhesive.

Further, the plurality of light-transmitting strips with reflective layers are cured and adhered by a transparent optical adhesive.

Further, raw materials for preparing the transparent optical adhesive include the following components in parts by weight:
15-25 parts of 2-ethylhexyl acrylate;
5-8 parts of butyl acrylate;
5-8 parts of methyl methacrylate;
10-15 parts of glycidyl methacrylate;
8-12 parts of tripropylene glycol diacrylate;
30-45 parts of ethyl acetate;
2-4 parts of chain transfer agent dodecyl mercaptan;
3-5 parts of 4-acryloxy benzophenone;
20-40 parts of ZrO₂; and
0.5-1 part of azobisisobutyronitrile.

Further, a preparation method of the transparent optical adhesive includes the following steps:
1) preheating one-third of the parts by weight of 2-ethylhexyl acrylate, one-third of the parts by weight of butyl acrylate, one-third of the parts by weight of methyl methacrylate, one-third of the parts by weight of glycidyl methacrylate, one-third of the parts by weight of tripropylene glycol diacrylate, one-third of the parts by weight of ethyl acetate, and one-third of the parts by weight of azobisisobutyronitrile at 80-90°C for 20-30 min to form a prepolymer mixture;
2) adding the parts by weight of ZrO₂ to the uncooled prepolymer mixture obtained in step 1), and stirring for 15-20 min at a revolving speed of 200-300 rpm;
3) heating remaining two-thirds of the parts by weight of 2-ethylhexyl acrylate, remaining two-thirds of the parts by weight of butyl acrylate, remaining two-thirds of the parts by weight of methyl methacrylate, remaining two-thirds of the parts by weight of glycidyl methacrylate, remaining two-thirds of the parts by weight of tripropylene glycol diacrylate, and remaining two-thirds of the parts by weight of azobisisobutyronitrile at 80-90°C for 20-30 min, stirring continuously during the heating process, mixing the obtained mixture with the mixture obtained in step 2) and the parts by weight of 4-acryloxy benzophenone, and heating and stirring continuously for 45-60 min at a revolving speed of 150-250 rpm at 70-85°C; and
4) heating to 150-180°C at a heating rate of 5-10°C/min under a nitrogen purging environment with a flow rate of 5 cm²/min to 10 cm²/min, stirring for 2-3 h in the state of heat preservation, cooling to 80°C and stirring continuously for 1 h, and then cooling to room temperature, to obtain the transparent optical adhesive.

Further, the light-transmitting strips are thin glass or acrylic plates.

Further, the light-transmitting strips have a thickness of 0.1-0.3 mm in a vertical longitudinal direction.

Further, a molecular formula of a neodymium-iron-boron magnetic material contained in the neodymium-iron-boron magnetic thin layer is NdFeB, Nd_{X}Fe₉₄₋ₓB₆, Nd_{1+y}Fe₄B₄, or Nd_{z}Fe₇₇B_{23-z}, where x=7, 8, 9, or 10, y=1 or 2, 5≤z≤15, and z is an integer.

Further, a preparation method for the light-transmitting strips with the reflective layers includes the following steps:
M1: taking a light-transmitting strip plate as a substrate, soaking the substrate with detergent for 10-20 min, ultrasonically cleaning the substrate for 10-20 min, adopting a mixed solution of anhydrous ethanol and acetone with a volume ratio of 4:7, continuously ultrasonically cleaning the substrate for 15-30 min, and then drying the substrate for later use;
M2: spraying Al powder on the substrate by a sprayer to form the first metal aluminum layer;
adopting single target magnetron sputtering equipment when the central magnetic layer is the Fe₃O₄ magnetic thin layer, setting a distance between targets and the substrate to 80-100 mm, filling argon, adjusting a sputtering power of a single target to 130-140 W for sputtering, and forming the central magnetic layer after sputtering; continuously spraying, after magnetron sputtering of the central magnetic layer, the Al powder on the central magnetic layer by the sprayer to form the second metal aluminum layer;
adopting a three-target co-sputtering instrument when the central magnetic layer is the neodymium-iron-boron magnetic thin layer, setting an angle between targets and a plane where the substrate is located to 15°-25°, and respectively adjusting a sputtering power of a first target which is a pure Nd element sputtering target to 20-50 W, a sputtering power of a second target which is a pure Fe element sputtering target to 30-70 W, and a sputtering power of a third target which is a pure B element sputtering target to 5-60 W, to control the final ratio of molecular formulas of Nd, Fe, and B elements in the neodymium-iron-boron magnetic thin layer respectively; continuously spraying, after magnetron sputtering of the central magnetic layer, the Al powder on the central magnetic layer by the sprayer to form the second metal aluminum layer; and
adjusting a gas pressure of the sputtering argon to 0.3-0.5 Pa and a revolving speed of the substrate to 50-60 rpm during the sputtering process, and finally forming plate-shaped materials with the reflective layers of the light-transmitting strips formed from the substrate; and
M3: cutting the plate-shaped materials obtained in step M2 into the light-transmitting strips with the reflective layers, having a width of 0.1-0.3 mm.

The present disclosure also provides a preparation method of the optical imaging element, including the following steps:
S1: clamping the plurality of light-transmitting strips with the reflective layers by clamps to form a single-layer sheet, and then performing double-sided grinding and polishing on upper and lower surfaces of the single-layer sheet by using a double-sided grinding and polishing disc until the upper and lower surfaces are ground flat and polished bright, to prepare the upper light-transmitting laminate and the lower light-transmitting laminate;
S2: placing the upper light-transmitting laminate and the lower light-transmitting laminate in a perpendicular direction within a plane direction of the formed single-layer sheet according to the direction of the first light-transmitting strip in the upper light-transmitting laminate and the direction of the second light-transmitting strip in the lower light-transmitting laminate;
S3: spin-coating the transparent optical adhesive on a lower surface of the upper light-transmitting laminate and an upper surface of the lower light-transmitting laminate, and curing and adhering the laminates to form the optical imaging unit; and
S4: curing and adhering the plurality of optical imaging units by the transparent optical adhesive.

The beneficial effects of the present disclosure are as follows:
1. According to the optical imaging element provided by the present disclosure, a plurality of first light-transmitting strips arranged in parallel of an upper light-transmitting laminate and a plurality of second light-transmitting strips arranged in parallel of a lower light-transmitting laminate in a plane where the optical imaging element is located are perpendicular in a horizontal direction of the plane to form a binary magneto-optical photonic crystal with a modular structure, or form a ternary magneto-optical photonic crystal structure when a plurality of optical imaging units including upper light-transmitting laminates and lower light-transmitting laminates are stacked. A non-reciprocal effect at an edge of a band gap is maximized, a magneto-optical isolator function is realized by using a non-reciprocal phase shift region, and the non-reciprocal phase shift region can be realized without a large thickness. Because of the non-reciprocal effect, transmission peaks of forward transmission and reverse transmission of defect modes are separated, and the frequency spacing between the transmission peaks can realize the isolator function.
2. A first metal aluminum layer, a central magnetic layer, and a second metal aluminum layer are arranged, and a sandwich laminated metal magnetic thin layer is used for limiting light in a vertical direction. A magnetic reflective layer is arranged on one side of the light-transmitting strip. The central magnetic layer having Fe₃O₄ or neodymium-iron-boron magnetic thin layers arranged between the two metal aluminum layers is prepared by magnetron sputtering, so that the dielectric constant is improved, and then the refractive index is reduced. Since the effective refractive index of the reflective layer is lower than that of a transparent plate, the light is limited in the vertical direction, and a light wave has extremely low insertion loss when propagating in a forward direction, but has great attenuation or reflection when propagating in a reverse direction, which is irreversible, thereby eliminating the influence of reflected light or scattered light on an optical system in an optical path and reducing the light loss.
3. A transparent optical curing agent is used for curing and adhering a plurality of optical imaging units and light-transmitting strips of the upper light-transmitting laminate or the lower light-transmitting laminate. Nanometer ZrO₂ is added into the curing agent. Nanometer ZrO₂, as a typical P-type semiconductor material, not only has high refractive index (2.3-2.4), but also has a wide band gap (7.8 eV), and has low photon absorption rate in the wavelength range of 300-1000 nm. Furthermore, ZrO₂ is a hexa-coordinated oxide, which has higher chemical stability and thermal stability. The transparent optical curing agent in the optical imaging element provided by the present disclosure can well control the distribution of nanoparticles in the system by adding ZrO₂ and utilizing the interaction between side hydroxyl groups on the molecular chains of each acrylic monomer and nano clusters formed by nanometer ZrO₂, and will not cause secondary coalescence due to large-scale wandering, thereby effectively improving the refractive index and light transmittance of the optical imaging element.
4. In the transparent optical curing agent used for curing and adhering optical imaging elements provided by the present disclosure, 4-acryloxybenzophenone is used as an unsaturated photosensitizer, and dodecyl mercaptan is used as a chain transfer agent for mixing reaction with a plurality of acrylic monomers, so that the plurality of acrylic monomers can be effectively amplified, and the spatial form of the finally formed transparent optical curing agent can be changed, thereby ensuring that the refractive index will not be reduced and refraction dislocation, transfer and other phenomena will not occur, ensuring that light will only be refracted twice in a plurality of upper light-transmitting laminates and lower light-transmitting laminates, and will not be refracted in an adhesive curing layer formed by the transparent optical curing agent, resulting in the change of the optical path, thereby avoiding the phenomenon of inaccurate optical path to be refracted finally.
5. The transparent optical curing agent used for curing and adhering optical imaging elements provided by the present disclosure utilizes a gradient heating curing mode of a normal temperature curing system in the preparation process, to ensure that a hybrid system of the plurality of acrylic monomers will not be cured before complete amplification, and that a homogeneous hybrid system after complete hydrolysis can quickly cure and cross-link inorganic nanoparticles in the network under the gradient heating condition, thereby effectively solving the problem of phase separation.

### BRIEF DESCRIPTION OF THE DRAWINGS

The present disclosure will be described in more detail below based on embodiments and with reference to the accompanying drawings. In the drawings:
FIG. 1 is a schematic cross-sectional view of an optical imaging unit in an optical imaging element with magnetic reflective layer imaging units according to Embodiment 1 of the present disclosure.
FIG. 2 is a side view of an optical imaging unit in an optical imaging element with magnetic reflective layer imaging units according to Embodiment 1 of the present disclosure.
FIG. 3 is a schematic cross-sectional view of an optical imaging element with magnetic reflective layer imaging units obtained by curing and adhering optical imaging units using a transparent optical curing agent according to Embodiment 6 of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the disclosed embodiments without creative efforts shall fall within the protection scope of the present disclosure.

It should be noted that the descriptions in the present disclosure relating to "first", "second" and the like are for descriptive purposes only and cannot be construed as indicating or implying their relative importance or implying the number of technical features indicated. Therefore, a feature restricted by "first" or "second" may explicitly indicate or implicitly include at least one of such features. In addition, technical solutions between the embodiments may be combined with each other, provided that the combination of the technical solutions can be implemented by a person of ordinary skill in the art. When the combined technical solutions conflict with each other or cannot be implemented, it should be considered that such a combination of the technical solutions does not exist or is not within the protection scope of this application.

Secondly, in the embodiments of the present disclosure, all directivity indications (such as up, down, left, right, front, and back) are only used to explain the relative positional relationship, movement situation, etc. among the components under a certain posture (as shown in the drawing). If the specific posture changes, the directivity indications will change accordingly, and the connection may be direct connection or indirect connection.

### Embodiment 1

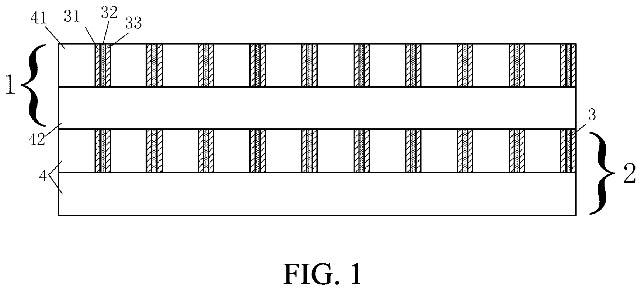

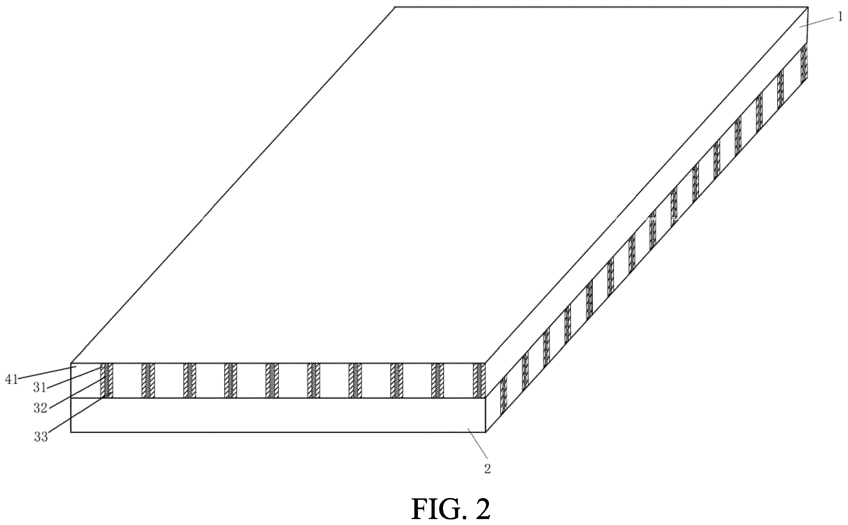

As shown in FIG. 1 to FIG. 2, this embodiment provides an optical imaging element with magnetic reflective layer imaging units. The optical imaging element includes one superimposed optical imaging unit. The optical imaging unit includes an upper light-transmitting laminate 1 and a lower light-transmitting laminate 2. The upper light-transmitting laminate 1 and the lower light-transmitting laminate 2 have the same structure composed of a plurality of light-transmitting strips 4 with reflective layers 3 in parallel. The direction of a first light-transmitting strip 41 in the upper light-transmitting laminate 1 is vertically intersected with the direction of a second light-transmitting strip 42 in the lower light-transmitting laminate 2.

The reflective layer 3 is a sandwich laminated metal magnetic thin layer. The sandwich laminated metal magnetic thin layer 3 includes a first metal aluminum layer 31, a central magnetic layer 32, and a second metal aluminum layer 33. The central magnetic layer 32 is sandwiched between the first metal aluminum layer 31 and the second metal aluminum layer 33. The sandwich laminated metal magnetic thin layer is bonded to the light-transmitting strip 4 by magnetron sputtering. The central magnetic layer 32 is a Fe₃O₄ magnetic thin layer. The Fe₃O₄ magnetic thin layer has a thickness of 0.05-0.2 µm. The thickness of the Fe₃O₄ magnetic thin layer may be selected in this range according to an actual optical refraction effect to be achieved, and may be 0.05 µm, 0.10 µm, 0.2 µm, or the like.

### Embodiment 2

This embodiment provides an optical imaging element with magnetic reflective layer imaging units. The optical imaging element includes two superimposed optical imaging units. The optical imaging unit includes an upper light-transmitting laminate 1 and a lower light-transmitting laminate 2. The upper light-transmitting laminate 1 and the lower light-transmitting laminate 2 have the same structure composed of a plurality of light-transmitting strips 4 with reflective layers 3 in parallel. The direction of a first light-transmitting strip 41 in the upper light-transmitting laminate 1 is vertically intersected with the direction of a second light-transmitting strip 42 in the lower light-transmitting laminate 2.

The reflective layer 3 is a sandwich laminated metal magnetic thin layer. The sandwich laminated metal magnetic thin layer 3 includes a first metal aluminum layer 31, a central magnetic layer 32, and a second metal aluminum layer 33. The central magnetic layer 32 is sandwiched between the first metal aluminum layer 31 and the second metal aluminum layer 33. The sandwich laminated metal magnetic thin layer is bonded to the light-transmitting strip 4 by magnetron sputtering. The central magnetic layer 32 is a neodymium-iron-boron magnetic thin layer. A molecular formula of a neodymium-iron-boron magnetic material contained in the neodymium-iron-boron magnetic thin layer is NdFeB, Nd_{X}Fe₉₄₋ₓB₆. The size of x may be selected according to an actual optical refraction effect to be achieved, and may be 7, 8, 9, or 10. The neodymium-iron-boron magnetic thin layer has a thickness of 0.05 mm.

### Embodiment 3

This embodiment provides an optical imaging element with magnetic reflective layer imaging units. The optical imaging element includes five superimposed optical imaging units. The optical imaging unit includes an upper light-transmitting laminate 1 and a lower light-transmitting laminate 2. The upper light-transmitting laminate 1 and the lower light-transmitting laminate 2 have the same structure composed of a plurality of light-transmitting strips 4 with reflective layers 3 in parallel. The direction of a first light-transmitting strip 41 in the upper light-transmitting laminate 1 is vertically intersected with the direction of a second light-transmitting strip 42 in the lower light-transmitting laminate 2.

The reflective layer 3 is a sandwich laminated metal magnetic thin layer. The sandwich laminated metal magnetic thin layer 3 includes a first metal aluminum layer 31, a central magnetic layer 32, and a second metal aluminum layer 33. The central magnetic layer 32 is sandwiched between the first metal aluminum layer 31 and the second metal aluminum layer 33. The sandwich laminated metal magnetic thin layer is bonded to the light-transmitting strip 4 by magnetron sputtering. The central magnetic layer 32 is a neodymium-iron-boron magnetic thin layer. A molecular formula of a neodymium-iron-boron magnetic material contained in the neodymium-iron-boron magnetic thin layer is Nd_{1+y}Fe₄B₄, where 0<y≤2, and y is 1 or 2. That is, the molecular formula of the neodymium-iron-boron magnetic material contained in the neodymium-iron-boron magnetic thin layer is Nd₂Fe₄B₄ or Nd₃Fe₄B₄. The neodymium-iron-boron magnetic thin layer has a thickness of 0.15 mm.

It should be noted that in Embodiments 1-3 provided by the present disclosure, the number of optical imaging units superimposed into the optical imaging element is not limited to one, two, or five, and the optical imaging units may be selectively superimposed according to actual optical refraction and imaging requirements to be achieved.

### Embodiment 4

Embodiment 1 differs from Embodiment 2 or 3 only in that the molecular formula of the neodymium-iron-boron magnetic material contained in the neodymium-iron-boron magnetic thin layer is NdFeB, and the neodymium-iron-boron magnetic thin layer has a thickness of 0.08 mm.

### Embodiment 5

Embodiment 1 differs from Embodiment 2 or 3 only in that the molecular formula of the neodymium-iron-boron magnetic material contained in the neodymium-iron-boron magnetic thin layer is Nd_{z}Fe₇₇B_{23-z}, where 5≤z≤15. The size of z may be selected in this range according to an actual optical refraction effect to be achieved, and may be 5, 8, 10, 12, or 15. The neodymium-iron-boron magnetic thin layer has a thickness of 0.2 mm.

### Embodiment 6

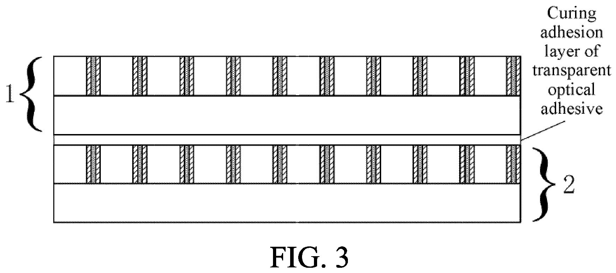

As shown in FIG. 3, on the basis of Embodiments 1-5, in the optical imaging element prepared in each embodiment, the upper light-transmitting laminate and the lower light-transmitting laminate are cured and adhered by a transparent optical adhesive. The plurality of superimposed optical imaging units are cured and adhered by the transparent optical adhesive.

### Embodiment 7

On the basis of Embodiments 1-5, in the optical imaging element prepared in each embodiment, the plurality of light-transmitting strips with reflective layers are cured and adhered by a transparent optical adhesive in the optical imaging element with magnetic reflective layer imaging units according to claim 1.

### Embodiment 8

Raw materials for preparing the transparent optical adhesive adopted in Embodiments 6 and 7 of the present disclosure include the following components in parts by weight:
15 parts of 2-ethylhexyl acrylate;
5 parts of butyl acrylate;
5 parts of methyl methacrylate;
10 parts of glycidyl methacrylate;
8 parts of tripropylene glycol diacrylate;
30 parts of ethyl acetate;
2 parts of dodecyl mercaptan;
3 parts of 4-acryloxy benzophenone;
20 parts of ZrO₂; and
0.5 parts of azobisisobutyronitrile.

A preparation method of the transparent optical adhesive includes the following steps:
1) Preheat 5 parts of 2-ethylhexyl acrylate, 1.67 parts of butyl acrylate, 1.67 parts of methyl methacrylate, 3.33 parts of glycidyl methacrylate, 2.67 parts of tripropylene glycol diacrylate, 30 parts of ethyl acetate, and 0.17 parts of azobisisobutyronitrile at 80°C for 20 min to form a prepolymer mixture.
2) Add the parts by weight of ZrO₂ to the uncooled prepolymer mixture obtained in step 1), and stir for 15-20 min at a revolving speed of 200-300 rpm.
3) Heat remaining 10 parts of 2-ethylhexyl acrylate, remaining 3.33 parts of butyl acrylate, remaining 3.33 parts of methyl methacrylate, remaining 6.67 parts of glycidyl methacrylate, remaining 5.33 parts of tripropylene glycol diacrylate, and remaining 0.33 parts of azobisisobutyronitrile at 80°C for 20 min, stir continuously during the heating process, mix the obtained mixture with the mixture obtained in step 2) and 3 parts of 4-acryloxy benzophenone, and heat and stir continuously for 45-60 min at a revolving speed of 150 rpm at 70°C.
4) Heat to 150°C at a heating rate of 5°C/min under a nitrogen purging environment with a flow rate of 5 cm²/min, stir for 2 h in the state of heat preservation, cool to 80°C and stir continuously for 1 h, and then cool to room temperature, to obtain the transparent optical adhesive.

Through experiments, the transparent optical curing agent provided in this embodiment has a light transmittance of 87.7% in a wavelength range of 200-800 cm and a refractive index of 0.89 in a test wavelength range of 600-650 nm, which shows that the transparent optical curing agent provided in this embodiment has good light transmittance and is not easy to cause unnecessary light refraction.

5g of the transparent optical curing agent was weighed by a differential scanning calorimeter, and the temperature was raised from -25°C to 200°C in nitrogen atmosphere, and the heating rate was 10°C/min. The thermal performance of the curing agent in this embodiment was detected, and the actual residual amount after thermogravimetric loss was 89.6%, which showed a good thermal stability.

### Embodiment 9

Raw materials for preparing the transparent optical adhesive adopted in Embodiments 6 and 7 of the present disclosure include the following components in parts by weight:
20 parts of 2-ethylhexyl acrylate;
6.6 parts of butyl acrylate;
6.4 parts of methyl methacrylate;
12 parts of glycidyl methacrylate;
10 parts of tripropylene glycol diacrylate;
38 parts of ethyl acetate;
3 parts of dodecyl mercaptan;
4 parts of 4-acryloxy benzophenone;
30 parts of ZrO₂; and
0.75 parts of azobisisobutyronitrile.

A preparation method of the transparent optical adhesive includes the following steps:
1) Preheat 6.7 parts of 2-ethylhexyl acrylate, 2.2 parts of butyl acrylate, 2.13 parts of methyl methacrylate, 4 parts of glycidyl methacrylate, 3.3 parts of tripropylene glycol diacrylate, 38 parts of ethyl acetate, and 0.25 parts of azobisisobutyronitrile at 85°C for 25 min to form a prepolymer mixture.
2) Add 30 parts of ZrO₂ to the uncooled prepolymer mixture obtained in step 1), and stir for 18 min at a revolving speed of 250 rpm.
3) Heat remaining 13.3 parts of 2-ethylhexyl acrylate, remaining 4.4 parts of butyl acrylate, remaining 4.27 parts of methyl methacrylate, remaining 8 parts of glycidyl methacrylate, remaining 6.7 parts of tripropylene glycol diacrylate, and remaining 0.5 parts of azobisisobutyronitrile at 85°C for 25 min, stir continuously during the heating process, mix the obtained mixture with the mixture obtained in step 2) and the parts by weight of 4-acryloxy benzophenone, and heat and stir continuously for 45-60 min at a revolving speed of 200 rpm at 80°C.
4) Heat to 165°C at a heating rate of 8 °C/min under a nitrogen purging environment with a flow rate of 8 cm²/min, stir for 2.5 h in the state of heat preservation, cool to 80°C and stir continuously for 1 h, and then cool to room temperature, to obtain the transparent optical adhesive.

Through experiments, the transparent optical curing agent provided in this embodiment has a light transmittance of 90.8% in a wavelength range of 200-800 cm and a refractive index of 0.74 in a test wavelength range of 600-650 nm, which shows that the transparent optical curing agent provided in this embodiment has good light transmittance and is not easy to cause unnecessary light refraction.

5g of the transparent optical curing agent was weighed by a differential scanning calorimeter, and the temperature was raised from -25°C to 200°C in nitrogen atmosphere, and the heating rate was 10°C/min. The thermal performance of the curing agent in this embodiment was detected, and the actual residual amount after thermogravimetric loss was 91.3%, which showed a good thermal stability.

### Embodiment 10

Raw materials for preparing the transparent optical adhesive adopted in Embodiments 6 and 7 of the present disclosure include the following components in parts by weight:
25 parts of 2-ethylhexyl acrylate;
8 parts of butyl acrylate;
8 parts of methyl methacrylate;
15 parts of glycidyl methacrylate;
12 parts of tripropylene glycol diacrylate;
45 parts of ethyl acetate;
4 parts of dodecyl mercaptan;
5 parts of 4-acryloxy benzophenone;
40 parts of ZrO₂; and
1 part of azobisisobutyronitrile.

A preparation method of the transparent optical adhesive includes the following steps:
1) Preheat 8.33 parts of 2-ethylhexyl acrylate, 2.67 parts of butyl acrylate, 2.67 parts of methyl methacrylate, 5 parts of glycidyl methacrylate, 4 parts of tripropylene glycol diacrylate, 45 parts of ethyl acetate, and 0.33 parts of azobisisobutyronitrile at 90°C for 30 min to form a prepolymer mixture.
2) Add 40 parts of ZrO₂ to the uncooled prepolymer mixture obtained in step 1), and stir for 20 min at a revolving speed of 300 rpm.
3) Heat remaining 16.67 parts of 2-ethylhexyl acrylate, remaining 5.33 parts of butyl acrylate, remaining 5.33 parts of methyl methacrylate, remaining 10 parts of glycidyl methacrylate, remaining 8 parts of tripropylene glycol diacrylate, and remaining 0.67 parts of azobisisobutyronitrile at 90°C for 30 min, stir continuously during the heating process, mix the obtained mixture with the mixture obtained in step 2) and the parts by weight of 4-acryloxy benzophenone, and heat and stir continuously for 60 min at a revolving speed of 1250 rpm at 85°C.
4) Heat to 180°C at a heating rate of 10 °C/min under a nitrogen purging environment with a flow rate of 10 cm²/min, stir for 3 h in the state of heat preservation, cool to 80°C and stir continuously for 1 h, and then cool to room temperature, to obtain the transparent optical adhesive.

Through experiments, the transparent optical curing agent provided in this embodiment has a light transmittance of 93.5% in a wavelength range of 200-800 cm and a refractive index of 0.66 in a test wavelength range of 600-650 nm, which shows that the transparent optical curing agent provided in this embodiment has good light transmittance and is not easy to cause unnecessary light refraction.

5g of the transparent optical curing agent was weighed by a differential scanning calorimeter, and the temperature was raised from -25°C to 200°C in nitrogen atmosphere, and the heating rate was 10°C/min. The thermal performance of the curing agent in this embodiment was detected, and the actual residual amount after thermogravimetric loss was 92.1%, which showed a good thermal stability.

### Embodiment 11

A preparation method for the light-transmitting strips with the reflective layers 3 in which the central magnetic layer of the reflective layer 3 is a Fe₃O₄ magnetic thin layer includes the following steps:
M1: Take a light-transmitting strip plate as a substrate, soak the substrate with detergent for 10-20 min, preferably 15 min, ultrasonically clean the substrate for 10-20 min (preferably 15 min), adopt a mixed solution of anhydrous ethanol and acetone with a volume ratio of 4:7, continuously ultrasonically clean the substrate for 15-30 min (preferably 20 min), and then dry the substrate for later use.
M2: Spray Al powder on the substrate by a sprayer to form the first metal aluminum layer.

Single target magnetron sputtering equipment is adopted when the central magnetic layer is the Fe₃O₄ magnetic thin layer. A distance between targets and the substrate is set to 80-100 mm (preferably 90 mm). Argon is filled, a sputtering power of a single target is adjusted to 135 W for sputtering, and the central magnetic layer is formed after sputtering. After magnetron sputtering of the Fe₃O₄ magnetic thin layer, the Al powder is continuously sprayed on the Fe₃O₄ magnetic thin layer by the sprayer to form the second metal aluminum layer.

A gas pressure of the sputtering argon is adjusted to 0.3-0.5 Pa (preferably 0.4 Pa) and a revolving speed of the substrate is adjusted to 50-60 rpm (preferably 55 rpm) during the sputtering process, and plate-shaped materials with the reflective layers (3) of the light-transmitting strips 4 formed from the substrate are finally formed.

M3: Cut the plate-shaped materials obtained in step M2 into the light-transmitting strips 4 with the reflective layers 3, having a width of 0.1-0.3 mm (preferably 0.2 mm).

Through experiments, a dielectric constant ε r of the reflective layer prepared by this embodiment is 8.96, which can realize Kerr rotation angle of about 45° and high reflectivity with a center wavelength of about 1 micron. A light wave has extremely low insertion loss when propagating in a forward direction, but has great attenuation or reflection when propagating in a reverse direction, which is irreversible, thereby eliminating the influence of reflected light or scattered light on an optical system in an optical path and reducing the light loss.

### Embodiment 12

A preparation method for the light-transmitting strips 4 with the reflective layers 3 in which the central magnetic layer of the reflective layer 3 is a neodymium-iron-boron magnetic thin layer and a molecular formula of a neodymium-iron-boron magnetic material contained in the neodymium-iron-boron magnetic thin layer is NdₓFe₉₄₋ₓB₆ (x=7, 8, 9, or 10) includes the following steps:
M1: Take a light-transmitting strip plate as a substrate, soak the substrate with detergent for 10 min, ultrasonically clean the substrate for 20 min, adopt a mixed solution of anhydrous ethanol and acetone with a volume ratio of 4:7, continuously ultrasonically clean the substrate for 15 min, and then dry the substrate for later use.
M2: Spray Al powder on the substrate by a sprayer to form the first metal aluminum layer, adopt a three-target co-sputtering instrument, set an angle between targets and a plane where the substrate is located to 15°, respectively adjust a sputtering power of a first target which is a pure Nd element sputtering target to 20 W, a sputtering power of a second target which is a pure Fe element sputtering target to 70 W, and a sputtering power of a third target which is a pure B element sputtering target to 5 W, to control Nd, Fe, and B elements in the neodymium-iron-boron magnetic thin layer to be x:94-x:6 respectively, and after magnetron sputtering of the neodymium-iron-boron magnetic thin layer with a molecular formula of NdₓFe₉₄₋ₓB₆, continuously spray the Al powder on the neodymium-iron-boron magnetic thin layer with a molecular formula of NdₓFe₉₄₋ₓB₆ by the sprayer to form the second metal aluminum layer.

A gas pressure of the sputtering argon is adjusted to 0.3 Pa and a revolving speed of the substrate is adjusted to 60 rpm during the sputtering process, and plate-shaped materials with the reflective layers 3 of the light-transmitting strips 4 formed from the substrate are finally formed.

M3: Cut the plate-shaped materials obtained in step M2 into the light-transmitting strips 4 with the reflective layers 3, having a width of 0.1 mm.

Through experiments, a dielectric constant ε r of the reflective layer prepared by this embodiment is 9.04, which can realize Kerr rotation angle of about 45° and high reflectivity with a center wavelength of about 1 micron. A light wave has extremely low insertion loss when propagating in a forward direction, but has great attenuation or reflection when propagating in a reverse direction, which is irreversible, thereby eliminating the influence of reflected light or scattered light on an optical system in an optical path and reducing the light loss.

### Embodiment 13

A preparation method for the light-transmitting strips 4 with the reflective layers 3 in which the central magnetic layer of the reflective layer 3 is a neodymium-iron-boron magnetic thin layer and a molecular formula of a neodymium-iron-boron magnetic material contained in the neodymium-iron-boron magnetic thin layer is Nd_{1+y}Fe₄B₄ (0<y≤2) includes the following steps:
M1: Take a light-transmitting strip plate as a substrate, soak the substrate with detergent for 15 min, ultrasonically clean the substrate for 15 min, adopt a mixed solution of anhydrous ethanol and acetone with a volume ratio of 4:7, continuously ultrasonically clean the substrate for 20 min, and then dry the substrate for later use.
M2: Spray Al powder on the substrate by a sprayer to form the first metal aluminum layer, adopt a three-target co-sputtering instrument, set an angle between targets and a plane where the substrate is located to 20°, respectively adjust a sputtering power of a first target which is a pure Nd element sputtering target to 30 W, a sputtering power of a second target which is a pure Fe element sputtering target to 50 W, and a sputtering power of a third target which is a pure B element sputtering target to 35 W, to control Nd, Fe, and B elements in the neodymium-iron-boron magnetic thin layer to be 1+y:4:4 respectively, and after magnetron sputtering of the neodymium-iron-boron magnetic thin layer with a molecular formula of Nd_{1+y}Fe₄B₄, continuously spray the Al powder on the neodymium-iron-boron magnetic thin layer with a molecular formula of Nd_{1+y}Fe₄B₄ by the sprayer to form the second metal aluminum layer.

A gas pressure of the sputtering argon is adjusted to 0.4 Pa and a revolving speed of the substrate is adjusted to 50-60 rpm during the sputtering process, and plate-shaped materials with the reflective layers 3 of the light-transmitting strips 4 formed from the substrate are finally formed.

M3: Cut the plate-shaped materials obtained in step M2 into the light-transmitting strips 4 with the reflective layers 3, having a width of 0.2 mm.

Through experiments, a dielectric constant ε r of the reflective layer prepared by this embodiment is 9.23, which can realize Kerr rotation angle of about 45° and high reflectivity with a center wavelength of about 1 micron. A light wave has extremely low insertion loss when propagating in a forward direction, but has great attenuation or reflection when propagating in a reverse direction, which is irreversible, thereby eliminating the influence of reflected light or scattered light on an optical system in an optical path and reducing the light loss.

### Embodiment 14

A preparation method for the light-transmitting strips 4 with the reflective layers 3 in which the central magnetic layer of the reflective layer 3 is a neodymium-iron-boron magnetic thin layer and a molecular formula of a neodymium-iron-boron magnetic material contained in the neodymium-iron-boron magnetic thin layer is NdFeB or Nd_{z}Fe₇₇B_{23-z} (5≤z≤15) includes the following steps:
M1: Take a light-transmitting strip plate as a substrate, soak the substrate with detergent for 20 min, ultrasonically clean the substrate for 10 min, adopt a mixed solution of anhydrous ethanol and acetone with a volume ratio of 4:7, continuously ultrasonically clean the substrate for 30 min, and then dry the substrate for later use.
M2: Spray Al powder on the substrate by a sprayer to form the first metal aluminum layer, adopt a three-target co-sputtering instrument, set an angle between targets and a plane where the substrate is located to 25°, and respectively adjust a sputtering power of a first target which is a pure Nd element sputtering target to 50 W, a sputtering power of a second target which is a pure Fe element sputtering target to 30 W, and a sputtering power of a third target which is a pure B element sputtering target to 5 W, to control Nd, Fe, and B elements in the neodymium-iron-boron magnetic thin layer to be 1: 1: 1 respectively.

Alternatively, a sputtering power of a first target which is a pure Nd element sputtering target is set to 50 W, a sputtering power of a second target which is a pure Fe element sputtering target is set to 70 W, and a sputtering power of a third target which is a pure B element sputtering target is set to 30 W, to control Nd, Fe, and B elements in the neodymium-iron-boron magnetic thin layer to be z:77:23-z respectively.

After magnetron sputtering of the neodymium-iron-boron magnetic thin layer with a molecular formula of NdFeB or Nd_{z}Fe₇₇B_{23-z}, the Al powder is continuously sprayed on the central magnetic layer by the sprayer to form the second metal aluminum layer.

A gas pressure of the sputtering argon is adjusted to 0.5 Pa and a revolving speed of the substrate is adjusted to 60 rpm during the sputtering process, and plate-shaped materials with the reflective layers 3 of the light-transmitting strips 4 formed from the substrate are finally formed.

M3: Cut the plate-shaped materials obtained in step M2 into the light-transmitting strips 4 with the reflective layers 3, having a width of 0.3 mm.

Through experiments, a dielectric constant ε r of the reflective layer prepared by this embodiment is 9.36 (the molecular formula of the neodymium-iron-boron magnetic thin layer is NdFeB) or 9.45 (the molecular formula of the neodymium-iron-boron magnetic thin layer is Nd_{z}Fe₇₇B_{23-z}), which can realize Kerr rotation angle of about 45° and high reflectivity with a center wavelength of about 1 micron. A light wave has extremely low insertion loss when propagating in a forward direction, but has great attenuation or reflection when propagating in a reverse direction, which is irreversible, thereby eliminating the influence of reflected light or scattered light on an optical system in an optical path and reducing the light loss.

### Embodiment 15

The present disclosure also provides a preparation method of the optical imaging element, including the following steps:
S1: Clamp the plurality of light-transmitting strips 4 with the reflective layers 3 by clamps to form a single-layer sheet, and then perform double-sided grinding and polishing on upper and lower surfaces of the single-layer sheet by using a double-sided grinding and polishing disc until the upper and lower surfaces are ground flat and polished bright, to prepare the upper light-transmitting laminate 1 and the lower light-transmitting laminate 2.
S2: Place the upper light-transmitting laminate 1 and the lower light-transmitting laminate 2 in a perpendicular direction within a plane direction of the formed single-layer sheet according to the direction of the first light-transmitting strip 41 in the upper light-transmitting laminate 1 and the direction of the second light-transmitting strip 42 in the lower light-transmitting laminate 2.
S3: Spin-coat the transparent optical adhesive on a lower surface of the upper light-transmitting laminate 1 and an upper surface of the lower light-transmitting laminate 2, and cure and adhere the laminates to form the optical imaging unit.
S4: Cure and adhere the plurality of optical imaging units by the transparent optical adhesive.

The optical imaging element provided by the present disclosure realizes unidirectional transmission in which the transmittance of symmetric/antisymmetric optical signals with a frequency of 0.417 c/a is greater than 90%.

The above embodiments are merely used for describing the technical solutions of the present disclosure, but are not intended to limit the present disclosure. Although the present disclosure is described in detail with reference to the foregoing embodiments, it should be appreciated by a person of ordinary skill in the art that, modifications may still be made to the technical solutions described in the foregoing embodiments, or replacements may be made to the part or all of the technical features, and these modifications or replacements will not cause the essence of corresponding technical solutions to depart from the scope of the technical solutions in the embodiments of the present disclosure.

Information of the BACKGROUND section is merely disclosed to increase the understanding of the overall background of the present disclosure, but is not necessarily regarded as acknowledging or suggesting, in any form, that the information constitutes the prior art known to a person of ordinary skill in the art.

## Claims

1. An optical imaging element with magnetic reflective layer imaging units, the optical imaging element comprising a plurality of superimposed optical imaging units, the optical imaging unit comprising an upper light-transmitting laminate (1) and a lower light-transmitting laminate (2), the upper light-transmitting laminate (1) and the lower light-transmitting laminate (2) having the same structure composed of a plurality of parallelly extending light-transmitting strips (4) and reflective layers (3), wherein the direction of a first light-transmitting strip (41) in the upper light-transmitting laminate (1) is vertically intersected with the direction of a second light-transmitting strip (42) in the lower light-transmitting laminate (2); **characterised in that**:
the reflective layer (3) is a sandwich laminated metal magnetic thin layer, the sandwich laminated metal magnetic thin layer (3) comprises a first metal aluminum layer (31), a central magnetic layer (32), and a second metal aluminum layer (33), and the central magnetic layer (32) is sandwiched between the first metal aluminum layer (31) and the second metal aluminum layer (33); the sandwich laminated metal magnetic thin layer is bonded to the light-transmitting strip (4) by magnetron sputtering; and the central magnetic layer (32) is a Fe₃O₄ magnetic thin layer or a neodymium-iron-boron magnetic thin layer, the neodymium-iron-boron magnetic thin layer has a thickness between 0.05-0.2 mm, and the Fe₃O₄ magnetic thin layer has a thickness between 0.05-0.2 µm.

2. The optical imaging element with magnetic reflective layer imaging units according to claim 1, wherein the upper light-transmitting laminate and the lower light-transmitting laminate are cured and adhered by a transparent optical adhesive, and the plurality of superimposed optical imaging units are cured and adhered by the transparent optical adhesive.

3. The optical imaging element with magnetic reflective layer imaging units according to claim 1, wherein the plurality of light-transmitting strips with reflective layers are cured and adhered by a transparent optical adhesive.

4. The optical imaging element with magnetic reflective layer imaging units according to claim 2 or 3, wherein raw materials for preparing the transparent optical adhesive comprise the following components in parts by weight:
15-25 parts of 2-ethylhexyl acrylate;
5-8 parts of butyl acrylate;
5-8 parts of methyl methacrylate;
10-15 parts of glycidyl methacrylate;
8-12 parts of tripropylene glycol diacrylate;
30-45 parts of ethyl acetate;
2-4 parts of dodecyl mercaptan;
3-5 parts of 4-acryloxy benzophenone;
20-40 parts of ZrO₂; and
0.5-1 part of azobisisobutyronitrile.

5. The optical imaging element with magnetic reflective layer imaging units according to claim 3, wherein a preparation method of the transparent optical adhesive comprises the following steps:
1) preheating one-third of the parts by weight of 2-ethylhexyl acrylate, one-third of the parts by weight of butyl acrylate, one-third of the parts by weight of methyl methacrylate, one-third of the parts by weight of glycidyl methacrylate, one-third of the parts by weight of tripropylene glycol diacrylate, one-third of the parts by weight of ethyl acetate, and one-third of the parts by weight of azobisisobutyronitrile at 80-90°C for 20-30 min to form a prepolymer mixture;
2) adding the parts by weight of ZrO₂ to the uncooled prepolymer mixture obtained in step 1), and stirring for 15-20 min at a revolving speed of 200-300 rpm;
3) heating remaining two-thirds of the parts by weight of 2-ethylhexyl acrylate, remaining two-thirds of the parts by weight of butyl acrylate, remaining two-thirds of the parts by weight of methyl methacrylate, remaining two-thirds of the parts by weight of glycidyl methacrylate, remaining two-thirds of the parts by weight of tripropylene glycol diacrylate, and remaining two-thirds of the parts by weight of azobisisobutyronitrile at 80-90°C for 20-30 min, stirring continuously during the heating process, mixing the obtained mixture with the mixture obtained in step 2) and the parts by weight of 4-acryloxy benzophenone, and heating and stirring continuously for 45-60 min at a revolving speed of 150-250 rpm at 70-85°C; and
4) heating to 150-180°C at a heating rate of 5-10°C/min under a nitrogen purging environment with a flow rate of 5 cm2/min to 10 cm2/min, stirring for 2-3 h in the state of heat preservation, cooling to 80°C and stirring continuously for 1 h, and then cooling to room temperature, to obtain the transparent optical adhesive.

6. The optical imaging element with magnetic reflective layer imaging units according to claim 1, wherein the light-transmitting strips (4) are glass or acrylic plates.

7. The optical imaging element with magnetic reflective layer imaging units according to claim 1, wherein the light-transmitting strips have a thickness of 0.1-0.3 mm in a vertical longitudinal direction.

8. The optical imaging element with magnetic reflective layer imaging units according to claim 1, wherein a molecular formula of a neodymium-iron-boron magnetic material contained in the neodymium-iron-boron magnetic thin layer is NdFeB, Nd_{X}Fe₉₄₋ₓB₆, Nd_{1+y}Fe₄B₄, or Nd_{z}Fe₇₇B_{23-z}, wherein x=7, 8, 9, or 10, y=1 or 2, 5≤z≤15, and z is an integer.

9. The optical imaging element with magnetic reflective layer imaging units according to claim 8, wherein a preparation method for the light-transmitting strips (4) with the reflective layers (3) comprises the following steps:
M1: taking a light-transmitting strip plate as a substrate, soaking the substrate with detergent for 10-20 min, ultrasonically cleaning the substrate for 10-20 min, adopting a mixed solution of anhydrous ethanol and acetone with a volume ratio of 4:7, continuously ultrasonically cleaning the substrate for 15-30 min, and then drying the substrate for later use;
M2: spraying Al powder on the substrate by a sprayer to form the first metal aluminum layer;
adopting single target magnetron sputtering equipment when the central magnetic layer is the Fe₃O₄ magnetic thin layer, setting a distance between targets and the substrate to 80-100 mm, filling argon, adjusting a sputtering power of a single target to 130-140 W for sputtering, and forming the central magnetic layer after sputtering; continuously spraying, after magnetron sputtering of the central magnetic layer, the Al powder on the central magnetic layer by the sprayer to form the second metal aluminum layer;
adopting a three-target co-sputtering instrument when the central magnetic layer is the neodymium-iron-boron magnetic thin layer, setting an angle between targets and a plane where the substrate is located to 15°-25°, and respectively adjusting a sputtering power of a first target which is a pure Nd element sputtering target to 20-50 W, a sputtering power of a second target which is a pure Fe element sputtering target to 30-70 W, and a sputtering power of a third target which is a pure B element sputtering target to 5-60 W, to control the final ratio of molecular formulas of Nd, Fe, and B elements in the neodymium-iron-boron magnetic thin layer respectively; continuously spraying, after magnetron sputtering of the central magnetic layer, the Al powder on the central magnetic layer by the sprayer to form the second metal aluminum layer; and
adjusting a gas pressure of the sputtering argon to 0.3-0.5 Pa and a revolving speed of the substrate to 50-60 rpm during the sputtering process, and finally forming plate-shaped materials with the reflective layers (3) of the light-transmitting strips (4) formed from the substrate; and
M3: cutting the plate-shaped materials obtained in step M2 into the light-transmitting strips (4) with the reflective layers (3), having a width of 0.1-0.3 mm.

10. A preparation method of the optical imaging element according to claim 1, comprising the following steps:
S1: clamping the plurality of light-transmitting strips (4) with the reflective layers (3) by clamps to form a single-layer sheet, and then performing double-sided grinding and polishing on upper and lower surfaces of the single-layer sheet by using a double-sided grinding and polishing disc until the upper and lower surfaces are ground flat and polished bright, to prepare the upper light-transmitting laminate (1) and the lower light-transmitting laminate (2);
S2: placing the upper light-transmitting laminate (1) and the lower light-transmitting laminate (2) in a perpendicular direction within a plane direction of the formed single-layer sheet according to the direction of the first light-transmitting strip (41) in the upper light-transmitting laminate (1) and the direction of the second light-transmitting strip (42) in the lower light-transmitting laminate (2);
S3: spin-coating the transparent optical adhesive on a lower surface of the upper light-transmitting laminate (1) and an upper surface of the lower light-transmitting laminate (2), and curing and adhering the laminates to form the optical imaging unit; and
S4: curing and adhering the plurality of optical imaging units by the transparent optical adhesive.

## Patentansprüche

1. Optisches Abbildungselement mit Abbildungseinheiten mit magnetischer Reflexionsschicht, wobei das optische Abbildungselement eine Mehrzahl übereinander gestapelter optischer Abbildungseinheiten umfasst, wobei jede optische Abbildungseinheit ein oberes lichtdurchlässiges Laminat (1) und ein unteres lichtdurchlässiges Laminat (2) aufweist, wobei das obere lichtdurchlässige Laminat (1) und das untere lichtdurchlässige Laminat (2) die gleiche Struktur aufweisen, die aus einer Mehrzahl parallel verlaufender lichtdurchlässiger Streifen (4) mit Reflexionsschichten (3) zusammengesetzt ist, wobei die Richtung eines ersten lichtdurchlässigen Streifens (41) im oberen lichtdurchlässigen Laminat (1) orthogonal zur Richtung eines zweiten lichtdurchlässigen Streifens (42) im unteren lichtdurchlässigen Laminat (2) verläuft; **dadurch gekennzeichnet, dass**
die Reflexionsschicht (3) eine sandwichartig laminierte metallische magnetische Dünnschicht ist, wobei die sandwichartig laminierte metallische magnetische Dünnschicht (3) eine erste Metallaluminiumschicht (31), eine zentrale magnetische Schicht (32) und eine zweite Metallaluminiumschicht (33) umfasst, und wobei die zentrale magnetische Schicht (32) zwischen der ersten Metallaluminiumschicht (31) und der zweiten Metallaluminiumschicht (33) sandwichartig angeordnet ist; wobei die sandwichartig laminierte metallische magnetische Dünnschicht durch Magnetronsputtern auf den lichtdurchlässigen Streifen (4) abgeschieden und dadurch mit diesem verbunden ist; und wobei die zentrale magnetische Schicht (32) eine Fe₃O₄-magnetische Dünnschicht oder eine Neodym-Eisen-Bor-magnetische Dünnschicht ist, wobei die Neodym-Eisen-Bor-magnetische Dünnschicht eine Dicke von 0,05 bis 0,2 mm aufweist und die Fe₃O₄-magnetische Dünnschicht eine Dicke von 0,05 bis 0,2 µm aufweist.

2. Optisches Abbildungselement mit Abbildungseinheiten mit magnetischer Reflexionsschicht nach Anspruch 1, wobei das obere lichtdurchlässige Laminat und das untere lichtdurchlässige Laminat mittels eines transparenten optischen Klebstoffs ausgehärtet und miteinander verklebt sind und die Mehrzahl der übereinander angeordneten optischen Abbildungseinheiten mittels des transparenten optischen Klebstoffs ausgehärtet und miteinander verklebt sind.

3. Optisches Abbildungselement mit Abbildungseinheiten mit magnetischer Reflexionsschicht nach Anspruch 1, wobei die Mehrzahl der lichtdurchlässigen Streifen (4) mit Reflexionsschichten (3) mittels eines transparenten optischen Klebstoffs ausgehärtet und miteinander verklebt sind.

4. Optisches Abbildungselement mit Abbildungseinheiten mit magnetischer Reflexionsschicht nach Anspruch 2 oder 3, wobei Ausgangsstoffe zur Herstellung des transparenten optischen Klebstoffs die folgenden Bestandteile in Gewichtsteilen umfassen:
15 bis 25 Gewichtsteile 2-Ethylhexylacrylat;
5 bis 8 Gewichtsteile Butylacrylat;
5 bis 8 Gewichtsteile Methylmethacrylat;
10 bis 15 Gewichtsteile Glycidylmethacrylat,
8 bis 12 Gewichtsteile Tripropylenglykoldiacrylat;
30 bis 45 Gewichtsteile Ethylacetat;
2 bis 4 Gewichtsteile Dodecylmercaptan;
3 bis 5 Gewichtsteile 4-Acryloxybenzophenon;
20 bis 40 Gewichtsteile ZrO₂; und
0,5 bis 1 Gewichtsteil Azobisisobutyronitril.

5. Optisches Abbildungselement mit Abbildungseinheiten mit magnetischer Reflexionsschicht nach Anspruch 3, wobei ein Herstellungsverfahren des transparenten optischen Klebstoffs die folgenden Schritte umfasst:
1) Vorerwärmen von jeweils einem Drittel der Gewichtsteile von 2-Ethylhexylacrylat, einem Drittel der Gewichtsteile von Butylacrylat, einem Drittel der Gewichtsteile von Methylmethacrylat, einem Drittel der Gewichtsteile von Glycidylmethacrylat, einem Drittel der Gewichtsteile von Tripropylenglykoldiacrylat, einem Drittel der Gewichtsteile von Ethylacetat sowie einem Drittel der Gewichtsteile von Azobisisobutyronitril bei 80 bis 90 °C für 20 bis 30 min zur Bildung einer Präpolymermischung;
2) Zugabe der Gewichtsteile von ZrO₂ zu der ungekühlten Präpolymermischung aus Schritt 1) und Rühren für 15 bis 20 min bei einer Drehzahl von 200 bis 300 U/min;
3) Erhitzen der verbleibenden zwei Drittel der Gewichtsteile von 2-Ethylhexylacrylat, der verbleibenden zwei Drittel der Gewichtsteile von Butylacrylat, der verbleibenden zwei Drittel der Gewichtsteile von Methylmethacrylat, der verbleibenden zwei Drittel der Gewichtsteile von Glycidylmethacrylat, der verbleibenden zwei Drittel der Gewichtsteile von Tripropylenglykoldiacrylat sowie der verbleibenden zwei Drittel der Gewichtsteile von Azobisisobutyronitril bei 80 bis 90 °C für 20 bis 30 min unter kontinuierlichem Rühren während des Erhitzungsvorgangs, Vermischen der erhaltenen Mischung mit der in Schritt 2) erhaltenen Mischung sowie den Gewichtsteilen von 4-Acryloxybenzophenon, und Erhitzen und kontinuierliches Rühren für 45 bis 60 min bei einer Drehzahl von 150 bis 250 U/min bei 70 bis 85 °C; und
4) Erhitzen auf 150 bis 180 °C bei einer Aufheizrate von 5 bis 10 °C/min unter einer Stickstoffspülumgebung mit einer Durchflussrate von 5 cm²/min bis 10 cm²/min, Rühren für 2 bis 3 h im Zustand der Wärmekonservierung, Abkühlen auf 80 °C und kontinuierliches Rühren für 1 h, und anschließendes Abkühlen auf Raumtemperatur, um den transparenten optischen Klebstoff zu erhalten.

6. Optisches Abbildungselement mit Abbildungseinheiten mit magnetischer Reflexionsschicht nach Anspruch 1, wobei die lichtdurchlässigen Streifen (4) Glasplatten oder Acrylplatten sind.

7. Optisches Abbildungselement mit Abbildungseinheiten mit magnetischer Reflexionsschicht nach Anspruch 1, wobei die lichtdurchlässigen Streifen (4) eine Dicke von 0,1 bis 0,3 mm in vertikaler Längsrichtung aufweisen.

8. Optisches Abbildungselement mit Abbildungseinheiten mit magnetischer Reflexionsschicht nach Anspruch 1, wobei eine chemische Formel eines Neodym-Eisen-Bor-magnetischen Materials, das in der Neodym-Eisen-Bor-magnetischen Dünnschicht enthalten ist, NdFeB, Nd*_{X}*Fe₉₄₋*_{X}B*₆, N*d*₁*_{+y}Fe*₄*B*₄ oder N*d_{z}Fe*₇₇*B*_{23-*z*} ist, wobei x = 7, 8, 9 oder 10 ist, y = 1 oder 2 ist, 5 ≤ z ≤ 15 gilt und z eine ganze Zahl ist.

9. Optisches Abbildungselement mit Abbildungseinheiten mit magnetischer Reflexionsschicht nach Anspruch 8, wobei ein Herstellungsverfahren für die lichtdurchlässigen Streifen (4) mit den Reflexionsschichten (3) die folgenden Schritte umfasst:
M1: Bereitstellen einer lichtdurchlässigen Streifenplatte als Substrat, Einweichen des Substrats in einem Reinigungsmittel für 10 bis 20 min, Ultraschallreinigen des Substrats für 10 bis 20 min, Verwenden einer Mischlösung aus wasserfreiem Ethanol und Aceton mit einem Volumenverhältnis von 4:7, kontinuierliches Ultraschallreinigen des Substrats für 15 bis 30 min und anschließendes Trocknen des Substrats zur späteren Verwendung;
M2: Aufsprühen von Al-Pulver auf das Substrat mittels eines Sprühgeräts zur Bildung der ersten Metallaluminiumschicht; Verwenden einer Einzeltarget-Magnetronsputteranlage, wenn die zentrale magnetische Schicht eine Fe₃O₄-magnetische Dünnschicht ist, Einstellen eines Abstands zwischen Target und dem Substrat auf 80 bis 100 mm, Befüllen mit Argon, Einstellen einer Sputterleistung des Einzeltargets auf 130 bis 140 W zum Sputtern und Abscheiden der zentralen magnetischen Schicht nach dem Sputtern; nach dem Magnetronsputtern der zentralen magnetischen Schicht kontinuierliches Aufsprühen des Al-Pulvers auf die zentrale magnetische Schicht mittels des Sprühgeräts zur Bildung der zweiten Metallaluminiumschicht; Verwenden einer Dreitarget-Co-Sputteranlage, wenn die zentrale magnetische Schicht eine Neodym-Eisen-Bor-magnetische Dünnschicht ist, Einstellen eines Winkels zwischen den Targets und einer Ebene, in der sich das Substrat befindet, auf 15° bis 25°, und jeweiliges Einstellen einer Sputterleistung eines ersten Targets, das ein reines Nd-Element-Sputtertarget ist, auf 20 bis 50 W, einer Sputterleistung eines zweiten Targets, das ein reines Fe-Element-Sputtertarget ist, auf 30 bis 70 W, und einer Sputterleistung eines dritten Targets, das ein reines B-Element-Sputtertarget ist, auf 5 bis 60 W, um das endgültige Verhältnis der Elemente Nd, Fe und B in der Neodym-Eisen-Bor-magnetischen Dünnschicht jeweils zu steuern; nach dem Magnetronsputtern der zentralen magnetischen Schicht kontinuierliches Aufsprühen des Al-Pulvers auf die zentrale magnetische Schicht mittels des Sprühgeräts zur Bildung der zweiten Metallaluminiumschicht; und Einstellen eines Gasdrucks des Sputterargons auf 0,3 bis 0,5 Pa und einer Drehzahl des Substrats auf 50 bis 60 U/min während des Sputtervorgangs sowie anschließendes Bilden plattenförmiger Materialien mit den Reflexionsschichten (3) der lichtdurchlässigen Streifen (4), die aus dem Substrat gebildet werden;
M3: Zuschneiden der in Schritt M2 erhaltenen plattenförmigen Materialien in die lichtdurchlässigen Streifen (4) mit den Reflexionsschichten (3) mit einer Breite von 0,1 bis 0,3 mm.

10. Verfahren zur Herstellung eines optischen Abbildungselements nach Anspruch 1, umfassend die folgenden Schritte:
S1: Einspannen der Mehrzahl von lichtdurchlässigen Streifen (4) mit den Reflexionsschichten (3) mittels Klemmen zu einem einlagigen Blatt und anschließendes Durchführen eines doppelseitigen Schleifens und Polierens an Ober- und Unterseiten des einlagigen Blatts unter Verwendung einer doppelseitigen Schleif- und Polierscheibe, bis die Ober- und Unterseiten plan geschliffen und glänzend poliert sind, um das obere lichtdurchlässige Laminat (1) und das untere lichtdurchlässige Laminat (2) herzustellen;
S2: Anordnen des oberen lichtdurchlässigen Laminats (1) und des unteren lichtdurchlässigen Laminats (2) in der Ebene des gebildeten einlagigen Blatts und Ausrichten entsprechend der Richtung des ersten lichtdurchlässigen Streifens (41) im oberen lichtdurchlässigen Laminat (1) sowie der Richtung des zweiten lichtdurchlässigen Streifens (42) im unteren lichtdurchlässigen Laminat (2), wobei die Richtungen orthogonal zueinander verlaufen;
S3: Aufschleudern des transparenten optischen Klebstoffs auf eine Unterseite des oberen lichtdurchlässigen Laminats (1) und eine Oberseite des unteren lichtdurchlässigen Laminats (2) sowie Aushärten und Verkleben der Laminate zur Bildung der optischen Abbildungseinheit; und
S4: Aushärten und Verkleben der Mehrzahl von optischen Abbildungseinheiten mittels des transparenten optischen Klebstoffs.

## Revendications

1. Élément d'imagerie optique avec des unités d'imagerie à couche réfléchissante magnétique, l'élément d'imagerie optique comprenant une pluralité d'unités d'imagerie optiques superposées, l'unité d'imagerie optique comprenant un stratifié transparent supérieur (1) et un stratifié transparent inférieur (2), le stratifié transparent supérieur (1) et le stratifié transparent inférieur (2) ayant la même structure composée d'une pluralité de bandes transparentes (4) s'étendant parallèlement et de couches réfléchissantes (3), dans lequel la direction d'une première bande transparente (41) dans le stratifié transparent supérieur (1) est verticalement intersectée avec la direction d'une seconde bande transparente (42) dans le stratifié transparent inférieur (2) ; **caractérisé en ce que** :
la couche réfléchissante (3) est une couche mince magnétique métallique stratifiée en sandwich, la couche mince magnétique métallique stratifiée en sandwich (3) comprend une première couche métallique d'aluminium (31), une couche magnétique centrale (32), et une seconde couche métallique d'aluminium (33), et la couche magnétique centrale (32) est intercalée entre la première couche métallique d'aluminium (31) et la seconde couche métallique d'aluminium (33) ; la couche mince magnétique métallique stratifiée en sandwich est liée à la bande transparente (4) par pulvérisation cathodique magnétron ; et la couche magnétique centrale (32) est une couche mince magnétique de Fe₃O₄ ou une couche mince magnétique de néodyme-fer-bore, la couche mince magnétique de néodyme-fer-bore ayant une épaisseur comprise entre 0,05 et 0,2 mm, et la couche mince magnétique de Fe₃O₄ ayant une épaisseur comprise entre 0,05 et 0,2 µm.

2. Élément d'imagerie optique avec des unités d'imagerie à couche réfléchissante magnétique selon la revendication 1, dans lequel le stratifié transparent supérieur et le stratifié transparent inférieur sont durcis et collés par un adhésif optique transparent, et la pluralité d'unités d'imagerie optiques superposées sont durcies et collées par l'adhésif optique transparent.

3. Élément d'imagerie optique avec des unités d'imagerie à couche réfléchissante magnétique selon la revendication 1, dans lequel la pluralité de bandes transparentes avec des couches réfléchissantes sont durcies et collées par un adhésif optique transparent.

4. Élément d'imagerie optique avec des unités d'imagerie à couche réfléchissante magnétique selon la revendication 2 ou 3, dans lequel les matières premières pour la préparation de l'adhésif optique transparent comprennent les composants suivants en parties en poids :
15 à 25 parties d'acrylate de 2-éthylhexyle ;
5 à 8 parties d'acrylate de butyle ;
5 à 8 parties de méthacrylate de méthyle ;
10 à 15 parties de méthacrylate de glycidyle ;
8 à 12 parties de diacrylate de tripropylène glycol ;
30 à 45 parties d'acétate d'éthyle ;
2 à 4 parties de dodécylmercaptan ;
3 à 5 parties de 4-acryloxy benzophénone ;
20 à 40 parties de ZrO₂ ; et
0,5 à 1 partie d'azobisisobutyronitrile.

5. Élément d'imagerie optique avec des unités d'imagerie à couche réfléchissante magnétique selon la revendication 3, dans lequel un procédé de préparation de l'adhésif optique transparent comprend les étapes suivantes :
1) préchauffage d'un tiers des parties en poids d'acrylate de 2-éthylhexyle, d'un tiers des parties en poids d'acrylate de butyle, d'un tiers des parties en poids de méthacrylate de méthyle, d'un tiers des parties en poids de méthacrylate de glycidyle, d'un tiers des parties en poids de diacrylate de tripropylène glycol, d'un tiers des parties en poids d'acétate d'éthyle, et d'un tiers des parties en poids d'azobisisobutyronitrile à 80-90 °C pendant 20-30 min pour former un mélange prépolymère ;
2) ajout des parties en poids de ZrO₂ au mélange prépolymère non refroidi obtenu à l'étape 1), et agitation pendant 15-20 min à une vitesse de rotation de 200-300 tr/min ;
3) chauffage des deux tiers restants des parties en poids d'acrylate de 2-éthylhexyle, des deux tiers restants des parties en poids d'acrylate de butyle, des deux tiers restants des parties en poids de méthacrylate de méthyle, des deux tiers restants des parties en poids de méthacrylate de glycidyle, des deux tiers restants des parties en poids de diacrylate de tripropylène glycol, et les deux tiers restants des parties en poids d'azobisisobutyronitrile à 80-90 °C pendant 20-30 min, agitation continue pendant le processus de chauffage, mélanger le mélange obtenu avec le mélange obtenu à l'étape 2) et les parties en poids de 4-acryloxy benzophénone, et chauffage et agitation continus pendant 45-60 min à une vitesse de rotation de 150-250 tr/min à 70-85 °C ; et
4) chauffage jusqu'à 150-180 °C à une vitesse de chauffage de 5-10 °C/min dans un environnement de balayage d'azote avec un débit de 5 cm³/min à 10 cm³/min, agitation pendant 2-3 h à l'état de maintien en température, refroidissement à 80 °C et agitation continue pendant 1 h, puis refroidissement à température ambiante, pour obtenir l'adhésif optique transparent.

6. Élément d'imagerie optique avec des unités d'imagerie à couche réfléchissante magnétique selon la revendication 1, dans lequel les bandes transparentes (4) sont des plaques de verre ou d'acrylique.

7. Élément d'imagerie optique avec des unités d'imagerie à couche réfléchissante magnétique selon la revendication 1, dans lequel les bandes transparentes ont une épaisseur de 0,1-0,3 mm dans une direction longitudinale verticale.

8. Élément d'imagerie optique avec des unités d'imagerie à couche réfléchissante magnétique selon la revendication 1, dans lequel une formule moléculaire d'un matériau magnétique de néodyme-fer-bore contenu dans la couche mince magnétique de néodyme-fer-bore est NdFeB, NdxFe94-xB6, Nd1+yFe₄B4, ou Nd₂Fe77B23-z, où x = 7, 8, 9, ou 10, y = 1 ou 2, 5 ≤ z ≤ 15, et z est un entier.

9. Élément d'imagerie optique avec des unités d'imagerie à couche réfléchissante magnétique selon la revendication 8, dans lequel un procédé de préparation pour les bandes transparentes (4) avec les couches réfléchissantes (3) comprend les étapes suivantes :
M1 : prise d'une plaque de bande transparente comme substrat, trempage du substrat avec un détergent pendant 10-20 min, nettoyage du substrat par ultrasons pendant 10-20 min, adoption d'une solution mixte d'éthanol anhydre et d'acétone avec un rapport volumique de 4:7, nettoyage continu du substrat par ultrasons pendant 15-30 min, puis séchage du substrat pour une utilisation ultérieure ;
M2 : pulvérisation de la poudre d'Al sur le substrat par un pulvérisateur pour former la première couche métallique d'aluminium ;
adoption d'un équipement de pulvérisation cathodique magnétron à cible unique lorsque la couche magnétique centrale est la couche mince magnétique de Fe₃O₄, réglage d'une distance entre les cibles et le substrat à 80-100 mm, remplissage d'argon, ajustage d'une puissance de pulvérisation d'une cible unique à 130-140 W pour la pulvérisation, et formation de la couche magnétique centrale après pulvérisation ; pulvérisation continue, après pulvérisation cathodique magnétron de la couche magnétique centrale, de la poudre d'Al sur la couche magnétique centrale par le pulvérisateur pour former la seconde couche métallique d'aluminium ;
adoption d'un instrument de co-pulvérisation à trois cibles lorsque la couche magnétique centrale est la couche mince magnétique de néodyme-fer-bore, réglage d'un angle entre les cibles et un plan où se trouve le substrat à 15°-25°, et ajustage respectif d'une puissance de pulvérisation d'une première cible qui est une cible de pulvérisation d'élément Nd pur à 20-50 W, d'une puissance de pulvérisation d'une seconde cible qui est une cible de pulvérisation d'élément Fe pur à 30-70 W, et d'une puissance de pulvérisation d'une troisième cible qui est une cible de pulvérisation d'élément B pur à 5-60 W, pour contrôler le rapport final des formules moléculaires des éléments Nd, Fe et B dans la couche mince magnétique de néodyme-fer-bore respectivement ; pulvérisation continue, après pulvérisation cathodique magnétron de la couche magnétique centrale, de la poudre d'Al sur la couche magnétique centrale par le pulvérisateur pour former la seconde couche métallique d'aluminium ; et
ajustage d'une pression de gaz de l'argon de pulvérisation à 0,3-0,5 Pa et d'une vitesse de rotation du substrat à 50-60 tr/min pendant le processus de pulvérisation, et formation finale de matériaux en forme de plaques pourvues de couches réfléchissantes (3) des bandes transparentes (4) formées à partir du substrat ; et
M3 : découpe des matériaux en forme de plaques obtenus à l'étape M2 en bandes transparentes (4) pourvues de couches réfléchissantes (3), ayant une largeur de 0,1-0,3 mm.

10. Procédé de préparation de l'élément d'imagerie optique selon la revendication 1, comprenant les étapes suivantes :
S1 : serrage de la pluralité de bandes transparentes (4) pourvues de couches réfléchissantes (3) par des pinces pour former une feuille monocouche, puis réalisation d'un meulage et d'un polissage double face sur les surfaces supérieure et inférieure de la feuille monocouche en utilisant un disque de meulage et polissage double face jusqu'à ce que les surfaces supérieure et inférieure soient meulées à plat et polies brillantes, pour préparer le stratifié transparent supérieur (1) et le stratifié transparent inférieur (2) ;
S2 : placement du stratifié transparent supérieur (1) et du stratifié transparent inférieur (2) dans une direction perpendiculaire dans une direction plane de la feuille monocouche formée selon la direction de la première bande transparente (41) dans le stratifié transparent supérieur (1) et la direction de la seconde bande transparente (42) dans le stratifié transparent inférieur (2) ;
S3 : enduction par centrifugation de l'adhésif optique transparent sur une surface inférieure du stratifié transparent supérieur (1) et une surface supérieure du stratifié transparent inférieur (2), et durcissement et collage des stratifiés pour former l'unité d'imagerie optique ; et
S4 : durcissement et collage de la pluralité d'unités d'imagerie optiques par l'adhésif optique transparent.
